# EUROPÄISCHE PATENTSCHRIFT

(11) **EP 1 675 543 B1**
(45) Veröffentlichungstag und Bekanntmachung des Hinweises auf die Patenterteilung: **03.12.2008**
(21) Anmeldenummer: 04790714.2
(22) Anmeldetag: 21.10.2004
(51) Int. Cl.: A61G 3/06, B60P 1/43

(54) **AUSZIEHBARE RAMPE**
EXTENSIBLE RAMP
RAMPE TELESCOPIQUE

(30) Priorität: 21.10.2003 DE 10348856
(43) Veröffentlichungstag der Anmeldung: 05.07.2006
(73) Patentinhaber: Schmitt, Alfred, Baar 56729 (DE)
(72) Erfinder: Schmitt, Alfred, Baar 56729 (DE)
(74) Vertreter: Keil, Rainer A.
(86) Internationale Anmeldenummer: PCT/EP2004/011908
(87) Internationale Veröffentlichungsnummer: WO 2005/039476

(56) Entgegenhaltungen:
- GB-A- 2 306 436
- US-A- 1 758 372
- US-A- 5 347 672
- US-B1- 6 463 613
- US-B1- 6 481 037
- US-B1- 6 484 344

## Beschreibung

Die Erfindung betrifft eine ausziehbare Rampe, insbesondere eine Rollstuhlrampe, entsprechend dem Oberbegriff des Anspruches 1 sowie eine Kombination einer derartigen Rampe mit einem Fahrzeug.

Es ist bekannt, dass Rollstuhlrampen aus aufzulegenden Blechen oder Kunststoffplatten bestehen, die bei Bedarf aus Zwischenböden von Fahrzeugen ausgezogen bzw. bei Treppen aufgelegt werden. Solche Systeme sind in den DIN (Deutzches Institut für Normung) Normen 18.022, 18.024, 18.025, 18.030 in Entwurf bzw. Landesbauordnungen beschrieben.

Bei den bestehenden Systemen sind die einzelnen Teile sperrig und schwer. Sie benötigen zudem beim Einbau in Fahrzeuge einen hohen Aufwand für Umbauten (Zwischenboden) und großen Platzbedarf.

Auch sind diese Einbauten nur von speziellen Firmen in sehr wenigen Fahrzeugtypen einzubauen. Bei Rampen im öffentlichen und privaten Bereich ist der Einbau und das Verstauen der Rampen nur mit großem Aufwand möglich bzw. nur mit Herstellung einer separaten Treppe und Rampe. Diese Systeme sind nur bei entsprechender Vorrichtung der Treppe zu benutzen und auch nicht für verschiedene Höhen einzusetzen. Ebenso ist der Einsatz der Rampen nur auf einen Verwendungszweck festgelegt.

Aus der US 5,517,708 ist eine Rampe für Rollstühle oder dgl. bekannt, die bei Bedarf an Treppen angebracht und vom Rollstuhlfahrer oder einer Begleitperson mitgeführt werden kann. Diese Rampe besteht aus zwei über Abstandshalter voneinander entfernte Fahrspuren, deren Länge teleskopartig angepasst werden kann. Zwischen den Fahrspuren soll ein Freiraum verbleiben, so dass eine Begleitperson die Treppenstufen nutzen kann. Zur Befestigung der Rampe müssen an der Treppe ortsfeste Verankerungshülsen vorgesehen sein, in welche entsprechende Verankerungsstifte der Rampe eingesetzt werden. Die Rampe ist daher ausschließlich an Orten einsetzbar, die mit wenigstens einer speziellen Verankerungshülse ausgestattet sind.

Weiter wird in der DE 100 26 809 C1 eine Auffahrrampe für Rollstuhlfahrer vorgeschlagen, die ein mittels Schrauben oder dgl. ortsfest an einer Treppenstufe befestigtes Kipplager aufweist, an welchem eine Auffahrplatte schwenkbar angelenkt ist. Auf der dem Kipplager gegenüberliegenden Seite der Auffahrplatte ist unter dieser ein aufblasbares Luftkissen angeordnet, so dass die Auffahrplatte auf ein Niveau mit dem Kipplager angehoben werden kann.

Aus US 5 347 672 und US 6 481 037 sind Rollstuhlrampe, um Überbrücken einer Höherdifferenz einer Treppe, bekannt.

Aufgabe der Erfindung ist es, eine einfache und leichte Rampe für das Überwinden von Höhenunterschieden mit einem Rollstuhl zu schaffen, die mit dem Rollstuhl mitführbar und individuell an einem beliebigen Ort in möglichst kurzer Zeit aufbaubar ist.

Diese Aufgabe wird durch eine Rampe mit den Merkmalen des Anspruches 1 gelöst.

Durch die erfindungsgemäße Verwendung von Rollladenprofilen als befahrbare Fläche der Rollstuhlrampe kann deren Länge individuell den örtlichen Gegebenheiten angepasst werden. Die erfindungsgemäße Rampe eignet sich daher besonders für den mobilen Transport bspw. mit dem Rollstuhl oder in einer von einer Begleitperson mitgeführten Tragetasche. Besondere ortsfeste Einrichtungen zum Installieren der erfindungsgemäßen Rampe sind nicht erforderlich, vielmehr lässt sich die Rampe an jedem beliebigen Absatz einer Treppe, eines Fahrzeugs oder dgl. in kurzer Zeit auch von ungeübten Personen auf- und abbauen. Hierdurch wird die Bewegungsfreiheit von Rollstuhlfahrern erheblich verbessert.

Der Fahrzeugeinbau der transportablen und teleskopierbaren Rampe ist in vielen Fahrzeugen möglich, z.B. durch eine Montage hinter das Fahrzeug an die Anhängerkupplung, bei Behindertentransportern an die Stoßfängerhalter oder einen Festeinbau im Zwischenboden bei geringem Platz- und Gewichtsbedarf. Bei privaten Fahrzeugen kann die Rampe im Kofferraum untergebracht werden.

Bei der Nutzung im öffentlichen und privaten Bereich kann man die Rampe auf jede Treppe auflegen und sofort benutzen. Durch das geringe Gewicht ist die Mitnahme der Rampe zu allen Orten, die für Rollstuhlfahrer sonst unerreichbar sind, problemlos möglich. Das Aufstellen der Rampe kann durch die einfache Bedienung von jedermann vorgenommen werden.

Bei dem Festeinbau kann die Rampe in eine neue oder bestehende Treppe integriert werden. Dadurch ist keine zusätzliche bauliche Maßnahme für die Rampe erforderlich. Die Oberfläche der Rampe kann an die Bodenbeläge angepasst werden (Fliesen, Teppichbelag, usw.).

Die Nutzung der Rampe ist nicht auf Rollstuhlfahrer beschränkt. Der Einsatz für Kinderwagen, Rollcontainer, als Beladehilfe für Fahrzeuge, usw. ist ebenfalls möglich.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:

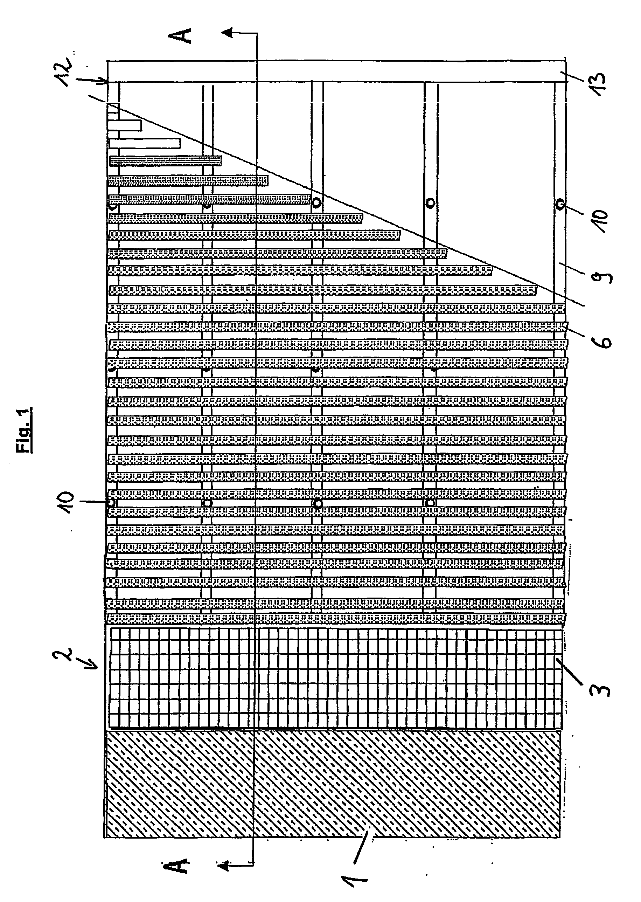

- Figur 1: eine Draufsicht auf eine erfindungsgemäße ausziehbare Rampe,

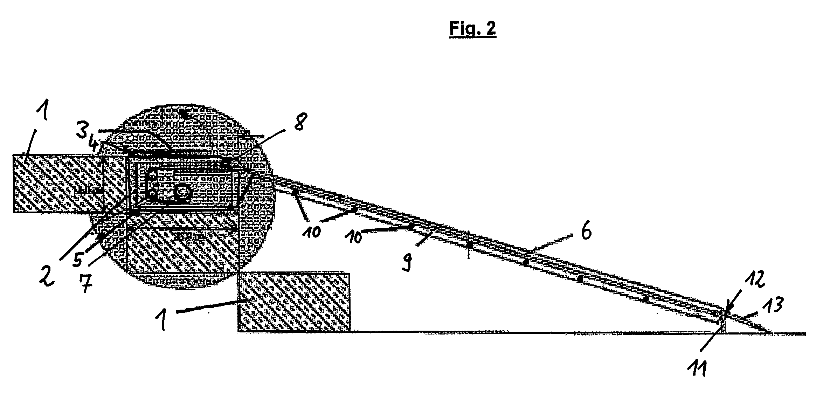

- Figur 2: einen vertikalen Schnitt durch die Rampe nach Fig. 1 entlang der Linie A-A und

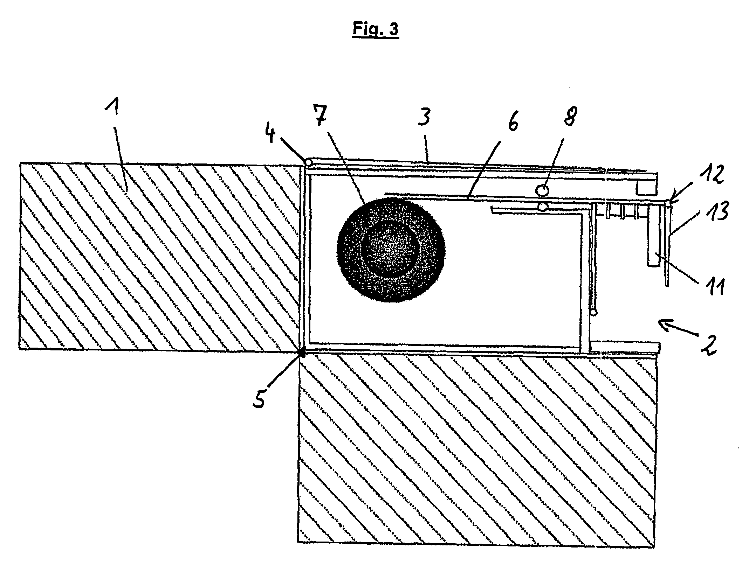

- Figur 3: einen vertikalen Schnitt durch den Grundkörper nach Fig. 1.

Vor der obersten Treppenstufe 1 einer Treppe wird der Grundkörper 2 auf die darunter liegende Treppenstufe aufgestellt. Auf dem Grundkörper 2 ist eine Klappe 3 zum Höhenausgleich zwischen der obersten Stufe und dem Grundkörper 2 mit einem Gelenk 4 befestigt. Für größere Höhendifferenzen ist die Klappe 3 ausziehbar. Der Grundkörper 2 ist insbesondere allseits mit einer rutschfesten Beschichtung 5 versehen. Der Rampenbelag aus Alurollladenprofilen 6 wird auf eine Wickelrolle 7 aufgerollt.

In die Wickelrolle kann ein Motor zum automatischen Auf- und Abwickeln der Rollladenprofile 6 eingebaut werden. Die Ausschubrollen 8 zum Ausfahren der Rampe sind manuell oder elektrisch angetrieben. Bei Handbedienung wird der Mechanismus mit Hilfe einer Kurbel und zwei Kegelzahnrädern manuell bedient. Die Kurbel ist auf der Oberseite des Grundkörpers 2 angebracht bzw. aufzustecken. Der Tragrahmen aus Vierkantrohren 9 faltet sich beim Einfahren vor dem Grundkörper 2 zusammen. Dabei wird das Rollladenprofil 6 im Grundkörper 2 aufgewickelt. Die Gelenke 10 zum Zusammenklappen sind so angeordnet, dass sich die Vierkantrohre 9 platzsparend falten lassen.

Alternativ kann der Tragrahmen 9 auch mit teleskopierbaren Vierkantrohren zum Einhängen an den Grundkörper 2 oder separaten Transport der Rohre in einer Tragetasche ausgestaltet sein.

Am Fußpunkt der Rampe sind der Tragrahmen 2, die Fußstütze 11, das Endgelenk 12 und das Rollladenprofil 6 mit einem Abschlussblech 13 verbunden, das einen besseren Übergang zur Bodenfläche ermöglicht. Zum Transport der Rampe können seitlich zwei in den Figuren nicht dargestellte Tragbügel montiert sein.

Alternativ kann der Rampenbelag auch aus klappbaren Elementen bestehen, die sich in dem Grundkörper 2 zusammenfalten. Diese Elemente werden aus drei Blechen zusammengesetzt, die als Dreieck mit Scharnieren befestigt sind. Beim Ausfahren klappen die Bleche auseinander und bilden einen stabilen Dreiecksrahmen, der ohne Unterstützung und zusätzlichen Tragrahmen auskommt. Die Aussteifung in Längsrichtung erfolgt über kurze Drahtseile, die die Bleche oben und unten miteinander verbinden. Gleichzeitig mit dem Rahmen wird der Belag ausgezogen und bildet die komplette Rampe. Zum Ein- und Ausfahren der Rampe kann ein Scherenantrieb eingebaut werden, der sich über eine sich drehende Gewindestange zusammen oder auseinander faltet.

Als weitere Möglichkeit erfolgt die Unterstützung des Rampenbelages mit einem aufblasbaren Kissen, das zusammengefaltet in dem Grundkörper 2 liegt. Die Form des Kissens ist der Schrägung der Rampe angepasst. Zum Aufblasen des Kissens pumpt ein Kleinkompressor Luft in das Kissen. Beim Entfalten zieht das Kissen den Rampenbelag mit nach vorne.

Zum Zusammenfalten wird mit einem Zweiwegeventil der Luftstrom des Kompressors umgekehrt. Um das Kissen gelegte Gummibänder ziehen die Konstruktion in die Ausgangsstellung zurück.

Abweichend von der in den Figuren dargestellten Ausführungsform kann der Grundkörper 2 auch einen nicht rechteckigen Querschnitt aufweisen. Insbesondere hat es sich als vorteilhaft erwiesen, wenn die im Benutzungszustand obere und die von der Treppe weg weisende vordere Wand des Grundkörpers 2 gerade und zueinander rechtwinklig ausgebildet sind, während die an den Treppen anliegenden Wände durch eine im Querschnitt viertelkreisförmige Wand gebildet werden.

## Patentansprüche

1. Transportable Rampe, welche von einer Person in einer Tragetasche transportierbar oder mit einem Rollstuhl mitführbar ist, insbesondere Rollstuhlrampe, zum Überbrücken einer Höhendifferenz einer Treppe, mit einer befahrbaren Fläche (6), die durch ein Rollladenprofil (6) aus mehreren gelenkig miteinander verbundenen, streifenförmigen Elementen gebildet wird, **dadurch gekennzeichnet, dass** das Rollladenprofil aus einem kastenartigen Grundkörper (2) aus- und einfahrbar ist, und dass dem Rollladenprofil wenigstens ein in seiner Länge einstellbares Trägerelement (9) zugeordnet ist und die Länge der befahrbaren Fläche individuell veränderbar ist, wobei das Trägerelement (9) durch einen an dem Grundkörper (2) schwenkbar angelenkten und über Gelenke (10) zusammenklappbaren Trägerrahmen (9) gebildet ist.

2. Rampe nach Anspruch 1, **dadurch gekennzeichnet, dass** in dem Grundkörper (2) eine motorisch und/oder manuell angetriebene Wickelrolle (7) vorgesehen ist, auf der das Rollladenprofil (6) auf- und abwickelbar ist.

3. Rampe nach Anspruch 2, **dadurch gekennzeichnet, dass** in dem Grundkörper (2) wenigstens eine motorisch und/oder manuell angetriebene Ausschubrolle (8) für das Rollladenprofil (6) vorgesehen ist.

4. Rampe nach einem der Ansprüche 1 bis 3, **dadurch gekennzeichnet, dass** der Grundkörper (2) wenigstens auf einer Seite eine rutschfeste Beschichtung (5) aufweist.

5. Rampe nach Anspruch 1, **dadurch gekennzeichnet, dass** der Trägerrahmen (9) mittels eines Scherenantriebs ein- und ausfahrbar ist.

6. Rampe nach einem der Ansprüche 1 bis 4, **dadurch gekennzeichnet, dass** das Trägerelement (9) durch mit dem Grundkörper (2) verbundene Bleche oder Platten gebildet ist, die derart an einander angelenkt sind, dass diese aus einem im Wesentlichen auf dem Grundkörper (2) aufgefalteten Lagerzustand in einen ausgefahrenen Betriebszustand überführbar sind, in dem sie einen Dreiecksrahmen bilden.

7. Rampe nach einem der Ansprüche 1 bis 4, **dadurch gekennzeichnet, dass** das Trägerelement (9) durch eine aufblasbare Unterkonstruktion gebildet ist.

8. Rampe nach einem der Ansprüche 1 bis 4, **dadurch gekennzeichnet, dass** das Trägerelement (9) Schienen aufweist, die lösbar verbindbar und/oder durch mehrere steckbare und/oder ineinander teleskopartig verschiebbare Schienenelemente gebildet sind.

9. Rampe nach einem der Ansprüche 1 bis 8, **dadurch gekennzeichnet, dass** das Rollladenprofil (6) und/oder das Trägerelement (9) an dem dem Grundkörper (2) abgewandten Ende über ein Gelenk (12) mit einer im Wesentlichen vertikal verlaufenden Fußstütze (11) und/oder einem unter einem spitzen Winkel zum Untergrund verlaufenden Abschlussblech (13) verbunden ist.

10. Rampe nach einem der Ansprüche 1 bis 9, **dadurch gekennzeichnet, dass** an dem Grundkörper (2) eine Klappe (3) zum Höhenausgleich angelenkt ist.

11. Rampe nach einem der Ansprüche 2 bis 10, **dadurch gekennzeichnet, dass** der Grundkörper (2) eine Breite in Richtung der Achse der Wickelrolle (7) von mindestens etwa 80 cm und eine Höhe in einer zu der Achse der Wickelrolle (7) senkrechten Richtung von etwa der Höhe einer Treppenstufe aufweist, und dass an dem Grundkörper (2) eine sich im Wesentlichen über seine gesamte Breite erstreckende Öffnung als Auslass für das Rollladenprofil (6) vorgesehen ist.

12. Rampe nach einem der Ansprüche 1 bis 11, **dadurch gekennzeichnet, dass** der Grundkörper (2) eine obere und eine vordere Wand aufweist, die näherungsweise eben und rechtwinklig zueinander ausgebildet sind, und die durch eine gemeinsame viertelkreisförmige Wand miteinander verbunden sind.

13. Kombination aus einer Rampe nach einem der Ansprüche 1 bis 12 und einem Fahrzeug, an dem die Rampe lösbar befestigt ist.

## Claims

1. Transportable ramp which can be transported by a person in a carrying bag or can be carried along with a wheelchair, in particular a wheelchair ramp, for bridging the difference in height of a step, with a passable surface (6) which is formed by a roller slatted profile (6) made of several strip-type elements that are connected to one another in an articulated manner,
**characterised in that**
the roller slatted profile can be extended out of and retracted into a box-like base body (2), and that allocated to the roller slatted profile is at least one carrier element (9) which is adjustable in length, and the length of the passable surface can be altered individually, wherein the carrier element (9) is formed by a carrier frame (9) which is articulated on the base body (2) in a pivoted manner and which can be folded up via joints (10).

2. Ramp according to claim 1, **characterised in that** provided in the base body (2) is a motorised and/or manually operated winding roller (7), onto which and from which the roller slatted profile (6) can be wound and unwound.

3. Ramp according to claim 2, **characterised in that** provided in the base body (2) is at least one motorised and/or manually operated extensor roller (8) for the roller slatted profile (6).

4. Ramp according to one of the claims 1 to 3, **characterised in that** on at least one side, the base body (2) has a slip-proof coating (5).

5. Ramp according to one of the claims 1, **characterised in that** the carrier frame (9) can be retracted and extended by means of a scissor drive.

6. Ramp according to one of the claims 1 to 4, **characterised in that** the carrier element (9) is formed by sheets or panels which are connected to the base body (2), and which are connected to one another in an articulated manner such that they can be conveyed from a storage state in which they are essentially folded onto the base body (2) into an extended operational state, **in that** they form a triangular frame.

7. Ramp according to one of the claims 1 to 4, **characterised in that** the carrier element (9) is formed by an inflatable substructure.

8. Ramp according to one of the claims 1 to 4, **characterised in that** the carrier element (9) has rails which can be detachably combined and/or are formed by several rail elements that can be connected in a plug-type manner and/or can be pushed into one another telescopically.

9. Ramp according to one of the claims 1 to 8, **characterised in that** the roller slatted profile (6) and/or the carrier element (9) is joined, at the end facing away from the base body (2), via a joint (12), to an essentially vertical foot rest (11) and/or a closure plate (13) that runs at an acute angle to the base.

10. Ramp according to one of the claims 1 to 9, **characterised in that** articulated on the base body (2) is a flap (3) for bridging the difference in height.

11. Ramp according to one of the claims 2 to 10, **characterised in that** in the direction of the axis of the winding roller (7), the base body (2) has a width of at least approximately 80 cm, and in a direction that is perpendicular to the axis of the winding roller (7) it has a height that is approximately the height of a step, and that provided on the base body (2) is an opening, extending essentially over its entire width, as an outlet for the roller slatted profile (6).

12. Ramp according to one of the claims 1 to 11, **characterised in that** the base body (2) has an upper and a front wall, which are designed to be approximately even and at right angles to one another, and which are joined to one another via a common wall in the shape of a quarter circle.

13. Combination of a ramp according to one of the claims 1 to 12 and a vehicle, to which the ramp is permanently or detachably connected.

## Revendications

1. Rampe transportable pouvant être transportée par une personne dans une sacoche ou pouvant être transportée avec un fauteuil roulant, notamment rampe pour fauteuil roulant, destinée à surmonter une différence de hauteur d'un escalier, avec une surface praticable (6) formée par un profilé de volet roulant (6) constitué de plusieurs rayure éléments articulés entre eux, **caractérisée en ce que** le profilé de volet roulant peut être déroulé et enroulé dans un bâti de base (2), et **en ce qu'**il est adjoint au profilé de volet roulant (6) au moins un élément porteur (9) réglable en longueur et que la longueur de la surface praticable peut être modifiée individuellement, l'élément porteur (9) étant formé par un cadre porteur (9) articulé pivotant sur le bâti de base (2) et pouvant être replié à l'aide d'articulations (10).

2. Rampe selon la revendication 1, **caractérisée en ce qu'**il est prévu dans le bâti de base (2) un axe d'enroulement (7) actionné par moteur et/ou manuellement et sur lequel le profilé de volet roulant (6) peut être enroulé et déroulé.

3. Rampe selon la revendication 2, **caractérisée en ce qu'**il est prévu dans le bâti de base (2) au moins un rouleau de sortie (8) actionné par moteur et/ou manuellement pour le profilé de volet roulant (6).

4. Rampe selon l'une des revendications 1 à 3, **caractérisée en ce que** le bâti de base (2) présente au moins sur un côté un revêtement antidérapant (5).

5. Rampe selon la revendication 1, **caractérisée en ce que** le cadre porteur (9) peut être déployé et rentré au moyen d'un mécanisme pantographe.

6. Rampe selon l'une des revendications 1 à 4, **caractérisée en ce que** l'élément porteur (9) est formé par des tôles ou des plaques reliées au bâti de base (2) et qui sont articulées ensemble de telle sorte qu'elles peuvent passer d'un état de rangement essentiellement replié sur le bâti de base (2) dans un étant de fonctionnement déployé dans lequel elles forment un cadre triangulaire.

7. Rampe selon l'une des revendications 1 à 4, **caractérisée en ce que** l'élément porteur (9) est formé par une construction inférieure gonflable.

8. Rampe selon l'une des revendications 1 à 4, **caractérisée en ce que** l'élément porteur (9) est muni de rails qui peuvent être reliés de façon réversible et/ou être formés par plusieurs éléments de rail enfichables et/ou rentrés les uns dans les autres de façon télescopique.

9. Rampe selon l'une des revendications 1 à 8, **caractérisée en ce que**, à l'extrémité opposée au bâti de base (2), le profilé de volet roulant (6) et/ou l'élément porteur (9) est relié par une articulation (12) à un pied (11) s'étendent principalement verticalement et/ou à une tôle terminale (13) s'étendant vers le sol en formant un angle aigu.

10. Rampe selon l'une des revendications 1 à 9, **caractérisée en ce qu'**un volet (3) est articulé sur le bâti de base (2) pour compenser une différence de hauteur.

11. Rampe selon l'une des revendications 2 à 10, **caractérisée en ce que** le bâti de base (2) a une largueur en direction de l'axe de l'axe d'enroulement (7) d'au moins 80 cm et une hauteur dans une direction perpendiculaire à l'axe de l'axe d'enroulement (7) d'environ la hauteur d'une marche d'escalier, et **en ce qu'**il est prévu sur le bâti de base (2) une ouverture s'étendant essentiellement sur toute la longueur de celui-ci pour la sortie du profilé de volet roulant (6).

12. Rampe selon l'une des revendications 1 à 11, **caractérisée en ce que** le bâti de base (2) est muni d'une paroi supérieure et d'une paroi antérieure qui sont sensiblement planes et perpendiculaire l'une à l'autre, et qui sont reliées ensemble par une paroi commune ayant la forme d'un quart de cercle.

13. Combinaison d'une rampe selon l'une des revendications 1 à 12 et d'un véhicule sur lequel la rampe est fixée de façon réversible.
